# EUROPEAN PATENT SPECIFICATION

(11) **EP 1 797 554 B1**
(45) Date of publication and mention of the grant of the patent: **20.05.2009**
(21) Application number: 05784946.5
(22) Date of filing: 20.09.2005
(51) Int. Cl.: G11B 7/00

(54) **SERVO BRANCH OF OPTICAL DISC DRIVE COMPRISING A SWITCHABLE DIAPHRAGM AND A DEVICE FOR BEAM DEFLECTION, AND METHODS FOR MEASURING BEAM LANDING AND SPHERICAL ABERRATION**
SERVOABZWEIG EINES OPTISCHEN PLATTENLAUFWERKES MIT SCHALTBARER MEMBRAN UND VORRICHTUNG ZUR STRAHLABLENKUNGEN SOWIE VERFAHREN ZUR MESSUNG VON STRAHLENLANDUNG UND SPHÄRISCHER ABERRATION
BRANCHE D'ASSERVISSEMENT DE LECTEUR DE DISQUE OPTIQUE COMPORTANT UN DIAPHRAGME COMMUTABLE ET UN DISPOSITIF POUR LA DEVIATION DE FAISCEAUX, ET PROCEDES POUR LA MESURE DE BOMBARDEMENT DE FAISCEAUX ET D'ABERRATION SPHERIQUE

(30) Priority: 27.09.2004 EP 04104678
(43) Date of publication of application: 20.06.2007
(73) Proprietor: Koninklijke Philips Electronics N.V., 5621 BA Eindhoven (NL)
(72) Inventor: STALLINGA, Sjoerd, NL-5656 AA Eindhoven (NL); HENDRIKS, Bernardus, H., W., NL-5656 AA Eindhoven (NL); TUKKER, Teus, NL-5656 AA Eindhoven (NL); KUIPER, Stein, NL-5656 AA Eindhoven (NL); IMMINK, Albert, H., J., NL-5656 AA Eindhoven (NL); LIEDENBAUM, Coen, T., H., F., NL-5656 AA Eindhoven (NL)
(74) Representative: Uittenbogaard, Frank
(86) International application number: PCT/IB2005/053092
(87) International publication number: WO 2006/035362

(56) References cited:
- EP-A- 0 255 403
- EP-A- 0 630 005
- EP-A- 0 951 014
- WO-A-20/04055793
- PATENT ABSTRACTS OF JAPAN vol. 010, no. 169 (P-468), 14 June 1986 (1986-06-14) & JP 61 020228 A (SONY KK), 29 January 1986 (1986-01-29)

## Description

### FIELD OF THE INVENTION

The subject of the invention is related to the field of optical systems for information storage, and more specifically to the servo branch of optical drives.

### BACKGROUND OF THE INVENTION

The invention relates to a servo branch of an optical drive comprising detection means for detecting zero order light beams and higher order light beams. An embodiment of such a device is known from the Encyclopaedia of Optical Engineering DOI: 10.1081/E-EOE 120009664, 2003.

The invention also relates to a method of measuring beam landing in such a device.

Such a device usually comprises several individual detectors to detect lights beams passing along the servo light path. A single light beam is split into diffracted orders between the light source and the start of the servo branch resulting in the beam being split into a zero order beam and higher order beams. An array of detectors is used to individually detect these beams. Detection is often restricted to zero order and plus and minus first order only. A problem of the known device is that, for each detector, associated drivers and electronics have to be added to the system, thus increasing cost and impacting space available in the device.

### SUMMARY OF THE INVENTION

It is an object of the invention to reduce the number of detectors required in the servo branch, while still allowing for the detection of higher order beams.

According to the invention, this object is realized in that the device is characterized in that a switchable diaphragm and a device for beam deflection are placed in a path of the zero and higher order light beams. The switchable diaphragm blocks unwanted light beams, or parts of beams, while allowing selected light beams, or parts of beams, to pass. The device for beam deflection alters the path of the light, providing a further means for manipulating the selected light beams. In such a way, the required number of detectors can be reduced as the landing position of each beam order, or parts of orders, can be diverted to another position.

A further embodiment of the device is characterized in that the switchable diaphragm is arranged to selectively block at least parts of orders of light beams. Thus it is possible to selectively block orders of light, or parts of orders, when performing measurements. This feature allows information from many parts of the light beams to be accessed independently, or in combination, according to the information or signals or measurements to be determined.

A further embodiment of the device is characterized in that the device for beam deflection comprises a grating. A grating can be made small enough to fit into the limited space in the servo device. In addition, the beam angles and change in direction of the beam at the grating can be carefully defined and controlled. It is also possible to arrange a number of smaller gratings, or grating segments, with different pitches, within the device and thus tailor the grating action to a particular requirement or selected beam.

A further embodiment of the device is characterized in that the device for beam deflection is arranged to steer diffracted orders of light towards a selected position in the detection means. Higher order beams may have to be deflected through greater angles than lower order beams in order to reach the same target, for instance by using a grating pitch which is more dense. By using segments of different gratings and assigning each grating to a particular light order, specific beam deflection can be accomplished. Thus a detector may be nominated as the target for a specific light beam order. In the case of a grating, the grating can be arranged to direct the beams as required. In such a way it is possible to make selected beams incident on the same detector. This would reduce the required number of detectors in the system to one main detector, thus reducing cost of manufacture and saving space within the device. It would also be possible to reduce the number of detectors to a more limited number, from three to two, for example, depending on application requirements.

A further embodiment of the invention is characterized with the device further comprising a servo lens placed in the path of the light beams, where the switchable diaphragm is placed at a position in the light path, between the servo lens and the detector, where the diffraction orders are physically separated. This effectively means the switchable diaphragm is at a position where the lateral displacement of the beams is greater than the beam diameter. This position has been found to be the most optimum position, allowing the individual orders to be blocked for separate measurement.

A further embodiment of the invention is characterized with the device further comprising a servo lens placed in the path of the light beams, where the device for beam deflection is placed at a position in the light path, between the servo lens and the detector, where the diffraction orders are physically separated. This effectively means the device for beam deflection is at a position where the lateral displacement of the beams is greater than the beam diameter. This position may be on either side of the switchable diaphragm, depending on the angle through which the orders must be deflected and the physical arrangement of the device.

A further embodiment of the invention is characterized in that the switchable diaphragm is based on electro wetting. Such a diaphragm is extremely useful in situations where the main zero order beam must be blocked off from the detector, as the diaphragm is manipulated to block or clear different areas depending on how an electrical voltage is applied, thus removing the need for physical connection to an outer ring, as might be required for a mechanical diaphragm.

A further embodiment of the invention is characterized in that the switchable diaphragm is a liquid crystal based diaphragm. This has the advantages of the electro wetting diaphragm but, with the present state of the art, is constructed under more mature manufacturing processes, and therefore can be produced in greater numbers.

A further embodiment of the invention is characterized in that the switchable diaphragm is circular in shape.

In an embodiment of the invention, a method for measurement of beam landing can be developed, the method comprising steps of:
deflection of higher order beams onto a selected detector
- selection of which light orders to measure
- blocking of beams to remove unwanted orders from detection
- measurement of beam intensity signals and tracking error signals from the required order or orders
- repetition of beam blocking and measurement steps for the required number of individual measurements
- averaging to obtain an averaged signal
- calculation of the average beam landing drift from the averaged signal
- correction for beam landing offset

The position of the light beam detected at the detector in the servo branch should, ideally, be central but in practice is not perfectly in position. The actual location of the spot must be determined in order to correct for this discrepancy and improve the performance of the optical drive. Beam landing drift may occur due to temperature variations or due to alignment changes arising during the lifetime of the device and must be checked periodically.

Detection of the plus and minus first order diffraction beams, and the zero order beam, can provide information on the spot position within the servo branch. These beam positions are often obtained by use of three detectors, one for each beam. By means of the invention, the beams can be directed towards a main detector and thus measured at the same detector, but can be measured independently by blocking off selected beams as needed with the switchable diaphragm.

### BRIEF DESCRIPTION OF THE DRAWING

These and other aspects of the invention and methods will be further elucidated and described with reference to the drawings, in which:
Fig. 1 is an embodiment of the optical system, of which the servo branch is a part, where the switchable diaphragm and device for beam deflection are placed between the servo lens and detector, and where the default light path is shown.
Fig. 2a and 2b show the standard way of beam landing detection requiring three detectors (Fig. 2a) and the way according to the invention requiring only one detector (Fig. 2b).
Fig. 3 shows a flowchart of beam landing measurement steps.

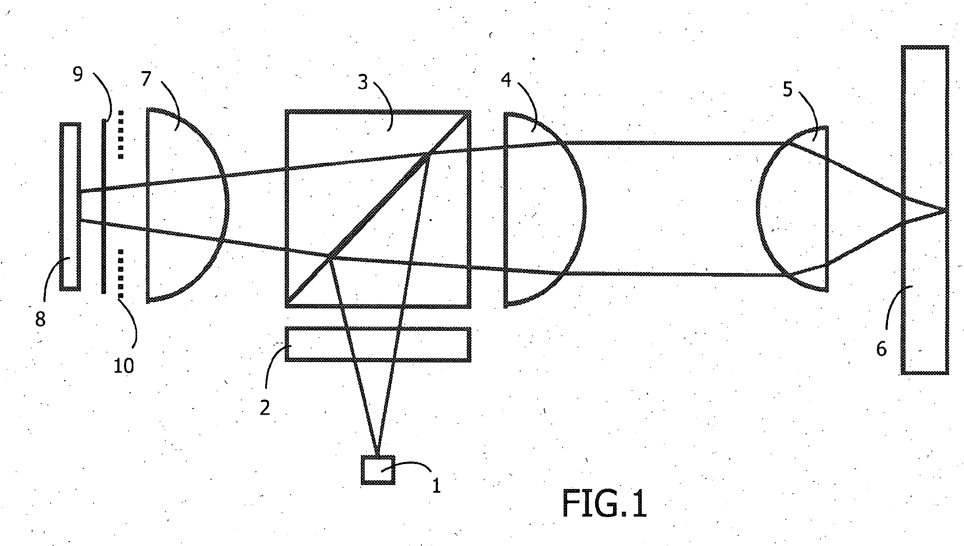

The embodiment of the invention displayed in Fig. 1 comprises several elements:
Elements, which are numbered 1 to 8 give an indication of the light path through the system in order from laser 1 to detector 8. Elements 9 and 10 are additional elements according to the invention.

These elements combine to function such that light from the laser 1 passes through the device optics to the disc 6 and is then returned from the disc 6 to the detector 8. At the start of the process, light from the laser diode 1 passes through the grating 2 and is diffracted into a zero order beam and higher order beams. Usually, only the zero order and plus and minus first orders are considered as these three beams provide a main spot for reading and writing to the disc 6 and two-satellite spots which can be used for beam landing or other measurements. A beam splitter 3. is added to the device to direct the beam reflected from the disc 6 to the detector 8. The laser diode 1 emits a diverging beam, thus requiring the light path to include the collimator lens 4, which turns the diverging beam into a well collimated one. The beam thus formed is then incident on the objective lens 5 and is focussed onto the disc 6. Light is reflected from the disc 6 and travels back to the beam splitter 3 where it is directed into the servo branch of the device towards the servo lens 7. The servo lens 7 directs and focuses the light onto the detector 8. A system such as that just described comprises elements of an optical drive known in the current state of the art. As an embodiment of the invention the switchable diaphragm 9 and the device for beam deflection 10 are added to the servo branch between the servo lens 7 and the detector 8. The positions of the switchable diaphragm 9 and the device for beam deflection 10 can also be interchanged, if so desired.

In an embodiment of the invention, it is possible to implement a method for beam landing measurement in which the device has a single main detector present. Beam landing measurement is an operation which has to be done only infrequently. The beam should ideally be central to the system but in practice there is always a small discrepancy. Temperature variations or alignment changes arising during lifetime can cause this discrepancy to change. Thus the beam landing position must be monitored. When the beam landing position is known, correction can be made for the deviation from central position, thus allowing optimization of the system performance.

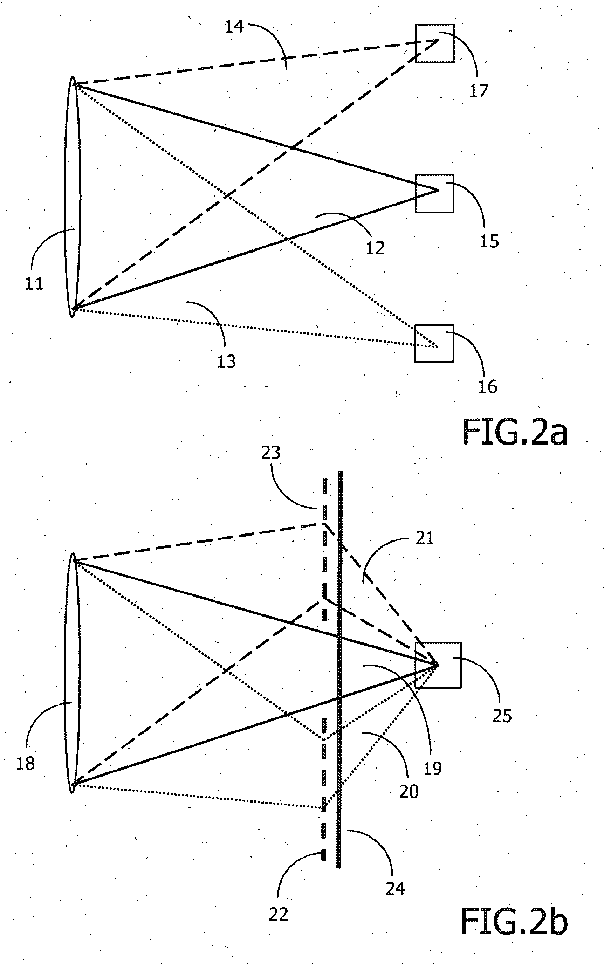

In Fig. 2a and 2b, only the section of the optical system at the detector end of the servo branch is shown. In order to illustrate the method of beam landing in the invention, consider a device where the light passing through the device comprises a zero order beam and a plus and minus first order beam (and higher orders which are neglected in the following discussion) and is traveling down the servo branch of the device. The light beams pass through the servo lens 11 or 18 and are directed towards the detector means 15, 16, 17 or 25.

In the current state of the art, the three-spots push pull method could be used to measure beam landing. This situation is shown in Fig. 2a. To measure beam landing, auxiliary spots from the first order beams 13 and 14 are detected using two additional two segment detectors 16 and 17, respectively. These detectors require additional drivers and electronics (not shown), adding significantly to the cost, and take up extra space in the device.

The zero order beam 12 is focussed onto a main detector 15 while the first order beams 13 and 14 are incident on auxiliary detectors 16 and 17, respectively. Usually, the main detector 15 is subdivided into quadrant segments and the auxiliary detectors 16 and 17 into two halves. It is possible to use more segmented detectors, but this would also add to the complexity and cost of the device. The position of the different beams on their respective detectors is determined and a calculation is performed to obtain a value for the beam coordinates. This correction is used to optimize the system performance.

An embodiment of the invention is shown in Fig. 2b. The zero and plus and minus first order beams 19, 20 and 21, respectively are deflected so that all beams are incident on the main detector 25. In order to separate signals from different beam orders, a switchable diaphragm 24 is used to block off light from unwanted orders while measurement of another order takes place. In the default configuration the two first order beams 20 and 21 are blocked off by the diaphragm 24 while the main beam 19 is allowed to fall on the quadrant detector 25 for detection of the high frequency signal and the normal focus error and tracking signal. The main beam 19 is then blocked and the two first order beams 20 and 21 are deflected to fall on the detector, using the device for beam deflection, here grating segments 22 and 23. Measurements are taken. The data is then averaged and the average beam landing drift can be derived and corrected for. The result is beam-landing measurement, as in the three-spots push pull method, but only one detector is needed, thereby simplifying the device and reducing the device cost.

In the method described above, the main detector was described as the central detector normally used to detect the zero order. Depending on the arrangement of switchable diaphragm and device for beam deflection chosen, it would also be possible to choose a different detector position and to redirect the zero order towards that detector in addition to deflecting the higher order beams as described. Alternatively, the number of detectors in the device could be reduced, but not necessarily to a single detector, and the beams directed as chosen.

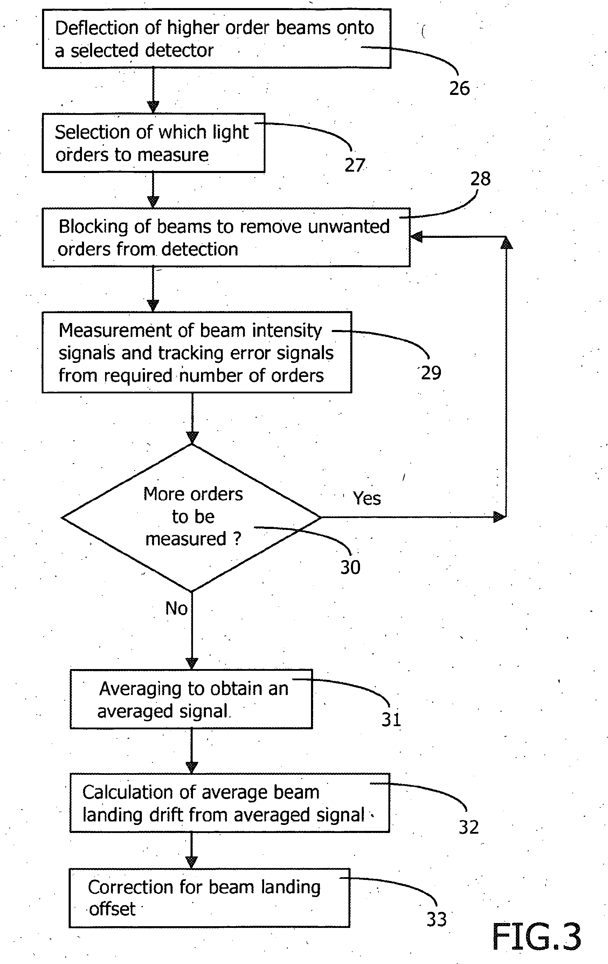

A method for beam landing measurement according to the invention is illustrated as a flowchart in Fig. 3.

Zero and higher order beams in the servo branch pass through the servo lens on the way to the detector means. According to the invention, the detector means comprises a single detector or a reduced number of detectors. A detector can be selected, and by means of the beam deflection device the light beams can be directed towards this detector 26. The beam deflection device may be a grating, grating segment, lens or mirror, for example, but the purpose is to control the direction of each beam order, independently from the rest of the orders.

For the measurement of beam landing, it is usual in the art to choose three beams - the zero order and plus and minus first orders. In principle, it is possible to use still higher orders to gain information, and, with the implementation of the invention, the possibility of doing this is increased, as each order no longer requires a dedicated detector. Thus the next step in the method must be to select which light orders should be measured 27.

It is possible to measure all orders together at the detector but a better practice is to select orders, measure each order separately and then average the results. To achieve separation of the orders, the invention provides for a blocking mechanism, a switchable diaphragm, which can be set-up to allow only one order, or a group of selected beam orders, to pass through, while blocking unwanted orders. Thus steps are included in the method such that the unwanted orders are removed from detection 28, the beam intensity signal and tracking error signals from the required order, or orders, are measured 29.

A check is then made to see if other orders must still be measured 30. If so, steps 28, 29 and 30 are repeated until no further measurements are needed. The averaged signal is then obtained from all the data gathered 31. This averaged signal is then used to calculate the average beam landing drift 32. This calculation provides input for correction for beam landing offset 33, necessary to optimize the performance of the optical drive.

### List of reference numerals (see Fig. 1, Fig. 2A, Fig. 2B):

- 1.: laser diode
- 2.: grating
- 3.: beam splitter
- 4.: collimator lens
- 5.: objective lens
- 6.: disc
- 7.: servo lens
- 8.: detector means
- 9.: switchable diaphragm
- 10.: device for beam deflection
- 11.: servo lens
- 12.: zero order beam
- 13.: first order beam
- 14.: first order beam
- 15.: main detector
- 16.: auxiliary detector
- 17.: auxiliary detector
- 18.: servo lens
- 19.: zero order beam
- 20.: first order beam
- 21.: first order beam
- 22.: grating segment
- 23.: grating segment
- 24.: diaphragm
- 25.: main detector

## Claims

1. A servo branch of an optical drive comprising detection means (8) for detecting zero order light beams and higher order light beams, **characterized in that** a switchable diaphragm (9) and a device for beam deflection (10) are placed in a path of the zero and higher order light beams.

2. A device according to claim 1 where the switchable diaphragm (9) is arranged to selectively block at least parts of orders of light.

3. A device according to claim 1 where the device for beam deflection (10) comprises a grating.

4. A device according to claim 1 where the device for beam deflection (9) is arranged to steer diffracted orders of light towards a selected position in the detection means (8).

5. A device according to claim 1, further comprising a servo lens (7) placed in the path of the light beams, where the switchable diaphragm. (9) is placed at a position in the light path, between the servo lens (7) and the detection means (8), where the diffraction orders are physically separated.

6. A device according to claim 1, further comprising a servo lens (7) placed in the path of the light beams, where the device for beam deflection (10) is placed at a positions in the light path, between the servo lens (7) and the detection means (8), where the diffraction orders are physically separated.

7. A device according to claim 1 where the switchable diaphragm (9) is based on electro wetting.

8. A device according to claim 1 where the switchable diaphragm (9) is a liquid crystal based diaphragm.

9. A device according to claim 1 where the switchable diaphragm (9) is circular in shape.

10. An optical drive comprising a servo branch according to claim 1.

11. A method for measurement of beam landing performance, the method comprising steps of:
- deflection of higher order beams onto a selected detector
- selection of which light orders to measure
- blocking of beams to remove unwanted orders from detection
- measurement of beam intensity signals and tracking error signals from the required order or orders
- repetition of beam blocking and measurement steps for the required number of individual measurements
- averaging to obtain an averaged signal
- calculation of the average beam landing drift from the averaged signal
- correction for beam landing offset.

## Patentansprüche

1. Servoabzweig eines optischen Plattenlaufwerks mit Detektionsmitteln (8) zum Detektieren von Lichtbündeln nullter Ordnung und von Lichtbündeln höherer Ordnung, **dadurch gekennzeichnet, dass** eine schaltbare Membran (9) und eine Vorrichtung zur Strahlablenkung (10) in einem Weg der Lichtbündel nullter und höherer Ordnung vorgesehen sind.

2. Einrichtung nach Anspruch 1, wobei die schaltbare Membran (9) zur selektiven Sperrung von wenigstens Teilen von Ordnungen von Licht vorgesehen ist.

3. Einrichtung nach Anspruch 1, wobei die Vorrichtung zur Strahlablenkung (10) eine Rasterung aufweist.

4. Einrichtung nach Anspruch 1, wobei die Vorrichtung zur Strahlablenkung (10) zum Steuern abgelenkter Größenordnungen von Licht in Richtung einer selektierten Position in den Detektionsmitteln (8).

5. Einrichtung nach Anspruch 1, wobei diese Einrichtung weiterhin eine in dem Weg der Lichtstrahlen vorgesehene Servolinse (7) aufweist, wobei die schaltbare Membran (9) an einer Stelle in dem Lichtweg vorgesehen ist, und zwar zwischen der Servolinse (7) und den Detektionsmitteln (8), wobei die Beugungsgrößenordnungen physikalisch getrennt sind.

6. Einrichtung nach Anspruch 1, wobei diese Einrichtung weiterhin eine in dem Weg der Lichtstrahlen vorgesehene Servolinse (7) aufweist, wobei die Vorrichtung zur Strahlablenkung (10) an einer Stelle in dem Lichtweg vorgesehen ist, und zwar zwischen der Servolinse (7) und den Detektionsmitteln (8), wobei die Beugungsgrößenordnungen physikalisch getrennt sind.

7. Einrichtung nach Anspruch 1, wobei die schaltbare Membran (9) auf Elektrobenetzung basiert.

8. Einrichtung nach Anspruch 1, wobei die schaltbare Membran (9) eine Membran auf Basis von Flüssigkristall ist.

9. Einrichtung nach Anspruch 1, wobei die schaltbare Membran (9) eine kreisrunde Form hat.

10. Optisches Plattenlaufwerk mit einem Servoabzweig nach Anspruch 1.

11. Verfahren zum Messen von Strahlenlandung, wobei das Verfahren die nachfolgenden Verfahrensschritte umfasst:
- Ablenkung von Strahlen höherer Ordnung zu einem selektierten Detektor,
- Selektion, welche Größenordnungen von Licht gemessen werden sollen,
- Sperrung von Strahlen zum Entfernen unerwünschter Größenordnungen aus der Detektion,
- Messung von Strahlenintensität und Spurfolgefehlersignalen aus der bzw. den erforderlichen Größenordnung(en),
- Wiederholung der Strahlensperr- und -messschritte fiir die erforderliche Anzahl einzelner Messungen,
- Mittelung zum Erhalten eines gemittelten Signals,
- Berechnung der gemittelten Strahlenlandungstrift aus dem gemittelten Signal,
- Korrektur des Strahlenlandungsoffsets.

## Revendications

1. Branche d'asservissement d'un lecteur optique comprenant des moyens de détection (8) destinés à détecter des faisceaux lumineux d'ordre zéro et des faisceaux lumineux d'ordre supérieur, **caractérisée en ce qu'**un diaphragme commutable (9) et un dispositif pour la déviation de faisceaux (10) sont placés dans un trajet des faisceaux lumineux d'ordre zéro et d'ordre supérieur.

2. Dispositif selon la revendication 1 où le diaphragme commutable (9) est agencé de manière à bloquer sélectivement au moins des parties d'ordres de lumière.

3. Dispositif selon la revendication 1 où le dispositif pour la déviation de faisceaux (10) comprend une grille.

4. Dispositif selon la revendication 1 où le dispositif pour la déviation de faisceaux (9) est agencé de manière à orienter des ordres diffractés de lumière vers une position choisie dans les moyens de détection (8).

5. Dispositif selon la revendication 1, comprenant en outre une lentille d'asservissement (7) placée dans le trajet des faisceaux lumineux, où le diaphragme commutable (9) est placé à une position dans le trajet lumineux, entre la lentille d'asservissement (7) et les moyens de détection (8), où les ordres de diffraction sont séparés physiquement.

6. Dispositif selon la revendication 1, comprenant en outre une lentille d'asservissement (7) placée dans le trajet des faisceaux lumineux, où le dispositif pour la déviation des faisceaux (10) est placé à une position dans le trajet lumineux, entre la lentille d'asservissement (7) et les moyens de détection (8), où les ordres de diffraction sont séparés physiquement.

7. Dispositif selon la revendication 1 où le diaphragme commutable (9) est basé sur l'électro-mouillage.

8. Dispositif selon la revendication 1 où le diaphragme commutable (9) est un diaphragme à cristaux liquides.

9. Dispositif selon la revendication 1 où le diaphragme commutable (9) est de forme circulaire.

10. Lecteur optique comprenant une branche d'asservissement selon la revendication 1.

11. Procédé de mesure de performance de bombardement de faisceaux, le procédé comprenant les étapes suivantes :
- déflection des faisceaux d'ordre supérieur vers un détecteur choisi
- choix des ordres lumineux devant être mesurés
- blocage des faisceaux pour éliminer les ordres indésirables de la détection
- mesure de signaux d'intensité de faisceau et de signaux d'erreur de poursuite à partir de l'ordre ou des ordres requis
- répétition des étapes de blocage des faisceaux et de mesure pour le nombre requis de mesures individuelles
- calcul de la moyenne pour obtenir le signal moyenné
- calcul de la dérive moyenne du bombardement de faisceaux à partir du signal moyenné
- correction du décalage du bombardement de faisceaux.
